(19) Europäisches Patentamt / European Patent Office / Office européen des brevets

(11) **EP 3 199 991 A1**

(12) **EUROPEAN PATENT APPLICATION**

(43) Date of publication:
**02.08.2017 Bulletin 2017/31**

(51) Int Cl.:
***G02B 6/02*** (2006.01)

(21) Application number: **16153043.1**

(22) Date of filing: **27.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Danmarks Tekniske Universitet 2800 Kgs. Lyngby (DK)**

(72) Inventors:
• **Habib, Md Selim**
  **2830 Virum (DK)**
• **Bang, Ole**
  **2830 Virum (DK)**
• **Bache, Morten**
  **2820 Gentofte (DK)**

(74) Representative: **Plougmann Vingtoft a/s Rued Langgaards Vej 8 2300 Copenhagen S (DK)**

(54) **OPTICAL FIBER**

(57)    An anti-resonant hollow-core optical fiber with a waveguide structure having a longitudinal direction. The optical fiber comprises an outer cladding region extending in the longitudinal direction, the outer cladding region having a substantially tubular inner wall forming an internal volume, and a core region comprising a central void. The fiber further comprising an inner cladding region comprising an optical material, the inner cladding region being arranged around the core region within the internal volume and extending in the longitudinal direction, the inner cladding region comprising a plurality of anti-resonance elements being arranged adjacent to the inner wall, each having an elongated cross-sectional geometry with a minor axis and a major axis, wherein the major axis is arranged along a radial direction of the fiber and the minor axis is arranged along a tangential direction of the fiber, and wherein the anti-resonance elements are further arranged in a distance from their neighboring elements, and wherein the anti-resonance elements have a negative curvature where they are proximal to the core region.

Fig. 2

## Description

FIELD OF THE INVENTION

The present invention relates to an optical fiber. More specifically, the invention relates to an anti-resonant optical fiber having a hollow core.

BACKGROUND OF THE INVENTION

Hollow-core fibers (HCFs) are a special kind of optical fibers, which confine the light inside a hollow air-core and they have been studied and developed for several decades. The ability to confine light inside a hollow air-core find numerous promising applications in areas such as light-gas interaction, high power delivery, ultra-short pulse delivery, pulse compression, mid-infrared and far-infrared transmission, and terahertz applications.

A well-known approach for guiding light in the air-core is to use a complex periodic structure in a surrounding cladding showing a photonic band gap in which the cladding does not support modes for a certain range of optical frequencies and propagation constants. In those ranges of optical frequencies, light in the core mode is not able to couple with cladding modes and guides in the hollow air-core with low losses. This type of fiber is known as hollow-core photonic band gap (HC-PBG) fiber. However, a significant drawback of HC-PBG fiber is its limited transmission bandwidth (typically less than 70 THz).

Recently, HCFs with a "negative curvature" of the core-cladding boundary have been investigated by several research groups as an alternative transmission medium owing to its low loss and wide transmission bandwidth. The term "negative curvature" means that the surface normal to the core boundary is oppositely directed from the core, which usually is achieved by letting a number of intersecting circular elements define the core boundary. This type of fiber is known as a hollow-core anti-resonant (HC-AR) fiber. The guiding mechanism of HC-AR fiber relies on the combination of an inhibited coupling (IC) between the core and cladding modes and anti-resonance. This inhibited coupling from the core to the cladding is the result of a low density of cladding modes, which allows the light to be guided in the air-core. The key advantage of HC-AR fiber is that the coupling between the core and cladding modes can be made anti-resonant (strongly inhibited) by carefully engineering the interaction between the core and cladding modes, which results in low loss and much broader spectral bandwidths. An important factor is to achieve a strongly negative curvature at the core boundary as this leads to increased mode confinement because the core mode is experiencing stronger inhibited coupling to the glass modes residing in the intersecting nodes of the negative-curvature cladding elements.

A very simple way of making HC-AR fibers is to use a glass capillary as cladding with a contiguous series of smaller circular elements attached to the cladding (so-called "anti-resonance" elements, as they provide the anti-resonant effect described above), and whose internal boundary defines the HC-AR negative-curvature core. HC-AR with anti-resonance elements of circular cross-section have been demonstrated in different materials, such as silica glass, as described in the paper by Pryamikov, et al., "Demonstration of a waveguide regime for a silica hollow-core microstructured optical fiber with a negative curvature of the core boundary in the spectral region > 3.5 $\mu$m," Opt. Express 19(2), 1441-1448 (2011), or chalcogenide-glass fibers for delivery of CO2-laser light as demonstrated in the paper Kosolapov, et al., "Demonstration of CO2-laser power delivery through chalcogenide-glass fiber with negative-curvature hollow core," Opt. Express 19(25), 25723-25728 (2011).

Importantly, it was shown that shrinking the size of the cladding elements so they no longer touched (i.e. they are "node-free") improved the loss performance [W. Belardi and J. C. Knight, "Hollow antiresonant fibers with low bending loss," Opt. Express 22(8), 10091-10096 (2014)]. The idea is to eliminate the glass modes residing in the intersecting points of the cladding elements, so the core mode no longer experiences any coupling at all to them: this reduces the leakage loss significantly. However, this performance improvement is quickly compensated for the fact that the smaller anti-resonant elements provide reduced inhibited coupling, a smaller mode confinement and thus increased leakage loss: Either the outer capillary is kept the same, and shrinking the anti-resonant circles gives a larger core and a reduced confinement, or the core radius is kept the same and shrinking the anti-resonant circles gives a reduced distance from the core mode to the cladding capillary. Both cases eventually will a larger loss contribution than that gained from making the elements node free.

HC-AR fibers with anti-resonance elements of more intricate shapes have, e.g., been demonstrated by Yu, et al., "Low loss silica hollow core fibers for 3-4 $\mu$m spectral region," Opt. Express 20(10), 11153-11158 (2012). However, this design does not conform with the node-free design, so other more complex designs suggested using nested smaller elements inside the larger elements, e.g. F. Poletti, "Nested antiresonant nodeless hollow core fiber," Opt. Express 22(20), 23807-23828 (2014), or M. S. Habib et al., "Low-loss hollow-core silica fibers with adjacent nested anti-resonant tubes," Opt. Express 23, 17394-17406 (2015). Although these designs improve the loss performance significantly, they are also very complex to fabricate.

Hence, an improved hollow-core anti-resonant optical fiber would be advantageous, and in particular a fiber having a lower loss would be advantageous. This motivates looking for simple design solutions where losses can be reduced without using nested elements, and where the loss values are as low as that offered by HC-PBG but with an increased bandwidth.

OBJECT OF THE INVENTION

An object of the present invention is to provide an alternative to the prior art, where anti-resonance elements in the cladding are able to give an increased negative curvature at the core boundary and a node-free configuration both without compromising the core size.

In particular, it may be seen as a further object of the present invention to provide a hollow-core fiber that solves the above mentioned challenges of the prior art with reducing leakage loss.

SUMMARY OF THE INVENTION

Thus, the above described object and several other objects are intended to be obtained in a first aspect of the invention by providing an anti-resonant hollow-core optical fiber with a waveguide structure having a longitudinal direction, the optical fiber comprising:

- an outer cladding region extending in the longitudinal direction, the outer cladding region having a substantially tubular inner wall and forming an internal volume,
- a core region comprising a central void, and
- an inner cladding region comprising an optical material, the inner cladding region being arranged around the core region within the internal volume and extending in the longitudinal direction, the inner cladding region comprising a plurality of anti-resonance elements being arranged adjacent to the inner wall, each having an elongated cross-sectional geometry with a minor axis and a major axis, wherein the major axis is arranged along a radial direction of the fiber and the minor axis is arranged along a tangential direction of the fiber, and wherein the anti-resonance elements are further arranged in a distance from their neighboring elements, and wherein the anti-resonance elements have a negative curvature where they are proximal to the core region. The inventors have realized that the combination of anti-resonance elements having an anisotropic elongated cross-sectional geometry, having a negative curvature of the core boundary, and that the elements are arranged so as to not touch each other, i.e. in a distance from each other to avoid glass nodes, and that the core size can be kept far from the outer capillary while simultaneously achieving the above mentioned properties, acts to reduce the optical loss of light being transmitted through the fiber.

In one embodiment, the anti-resonance elements are evenly distributed tubes with substantially equal and uniform wall thicknesses so as to create the desired anti-resonant effects.

Here, it is necessary to clarify what exactly is meant by a negative curvature of the core boundary. To this end, it will be assumed that if the surface normal to the core boundary is co-directional with a radial unit vector in a cylindrical coordinate system then we have a positive curvature of the core boundary and vice versa.

Optical loss in the fiber may be attributed to several loss contributions, such as material attenuation, scattering loss, and leakage loss. The present invention is primarily aimed at reducing leakage loss of the fiber, which constitutes a major loss contribution due to the low overlap between a light field propagating along the fiber and the optical material. By employing anti-resonance elements with an elongated cross-sectional geometry, the distance between the core and the outer cladding may be increased for a given size of core and a given size of anti-resonance elements along the minor axis and while achieving a relatively large negative curvature at the core. At the same time intersecting nodes between the anti-resonance elements are avoided.

In an embodiment of the fiber according to the invention, the elongated cross-sectional geometry of the anti-resonance element is an oval geometry.

In an embodiment of the fiber according to the invention, the elongated cross-sectional geometry of the anti-resonance element is an elliptical geometry.

In an embodiment of the fiber according to the invention, a ratio between the outer dimensions of the anti-resonance elements along the minor and major axis, respectively, is in the range 0.4-0.8, such as in the range 0.5-0.75, or even such as in the range 0.6-0.7.

In an embodiment of the fiber according to the invention, one or more of the anti-resonance elements comprise an inner void.

In an embodiment of the fiber according to the invention, one or more of the anti-resonance elements comprises multiple inner voids.

In an embodiment of the fiber according to the invention, one or more of the anti-resonance elements comprises a strut separating the inner void from element surroundings, and wherein the strut has a strut thickness, as measured in the cross-sectional plane, in the range 0.2 $\mu$m-0.45 $\mu$m, such as in the range 0.2 $\mu$m-0.3 $\mu$m, or even such as in the range 0.3 $\mu$m-0.45 $\mu$m. The inventors have realized that these values are highly attractive for a fiber made for transmitting light with a wavelength around about 1060 nm. The fiber structure may be scaled to accommodate light with other wavelengths. The wavelength scaling of the resonances depends on the strut thickness and follows this eqn.

$\lambda = \frac{2}{m} t \sqrt{n^2 - 1}$, where m is the resonance order, and n is the refractive index of the optical material, and $\lambda$ is the resonance wavelength. For example t=0.42 $\mu$m and R = 15 $\mu$m results in a resonance at a wavelength around 0,88 $\mu$m, meaning that a fiber with those dimensions will operate in the 0.9-2 $\mu$m range. Therefore, one can shift the wavelength regime by scaling the strut thickness.

In an embodiment of the fiber according to the invention, a radius of curvature of the anti-resonance elements in a region adjacent to the core region is in the range of 2 μm-10 μm, such as in the range 3 μm-8 μm, or even such as in the range 4 μm-6 μm.

In an embodiment of the fiber according to the invention, the fiber is configured for transmitting light having a wavelength in the range 0.45 μm-2.0 μm, such as in the range 0.45 μm-0.8 μm or in the range 0.9 μm-2.0 μm, or in the range 0.5 μm-1.6μm, or even in the range 0.8 μm-1.2 μm. By choosing suitable dimensions for the core size, strut thickness, and minor and major axis dimensions, it is possible to scale the fiber structure to guide light at vastly different wavelengths. I.e. by doubling all dimensions, the transmission window of the fiber will substantially double in wavelength, however subject to changes due to material dispersion (wavelength dependence of refractive index).

In an embodiment of the fiber according to the invention, the optical material is chosen from glasses in the group of silica, ZBLAN, fluorides, tellurite, phosphate, chalcogenide, or a polymer such as PMMA, or topas.

Furthermore, the above-described object and several other objects are intended to be obtained in a second aspect of the invention by use of the anti-resonant hollow-core optical fiber according to any one of the previous claims, for delivery of optical pulses.

In an embodiment of the invention the optical pulses are femtosecond pulses.

Additionally, the above described object and several other objects are intended to be obtained in a third aspect of the invention by a system comprising the anti-resonant hollow-core optical fiber according to the first aspect, and a Yb-femtosecond laser.

BRIEF DESCRIPTION OF THE FIGURES

The hollow-core anti-resonant optical fiber according to the invention will now be described in more detail with regard to the accompanying figures. The figures show one way of implementing the present invention and is not to be construed as being limiting to other possible embodiments falling within the scope of the attached claim set.

Figure 1 illustrates a cross-sectional view of a HC-AR fiber according to the prior art.
Figure 2 shows a cross-sectional view of an embodiment of the HC-AR fiber according to the present invention.
Figure 3 shows calculations of leakage loss vs. air-hole radius for HC-AR fibers with circular anti-resonance elements.
Figure 4 shows calculations of leakage loss vs. ellipticity for embodiments of HC-AR fibers according to the present invention.
Figure 5 shows leakage loss comparison of HC-AR fibers according to an embodiment of the present invention to more conventional designs of HC-AR fibers.

Figure 6 shows the wavelength dependence of the leakage loss and power fraction in silica, respectively, for two different strut thicknesses.
Figure 7 shows leakage loss and power fraction in silica for varying strut thickness for a wavelength of 1060nm.
Figure 8 shows a study of core and cladding modes with respect to modal indices, leakage loss and higher-order-mode extinction ratio (HOMER) for an embodiment of the HC-AR fiber according to the invention.
Figure 9 shows simulations of leakage loss and HOMER vs wavelength for an embodiment of the HC-AR fiber according to the invention.
Figure 10 shows a comparison of HOMER vs wavelength for HC-AR fibers with circular anti-resonance elements, and HC-AR fibers according to the present invention having elliptical anti-resonance elements.

DETAILED DESCRIPTION OF AN EMBODIMENT

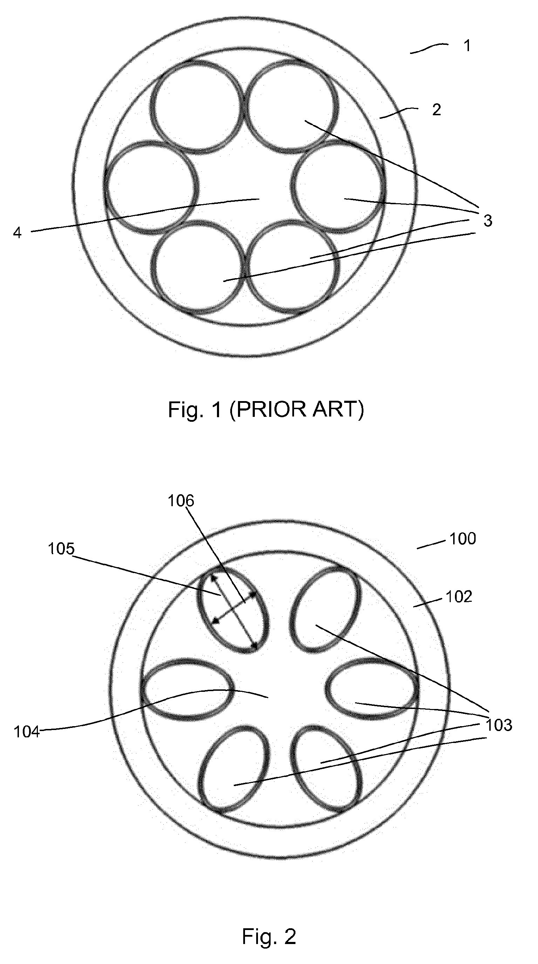

Figure 1 illustrates a HC-AR fiber 1 according to the prior art. The fiber comprises an outer cladding 2, typically in the form of a capillary. A number of anti-resonance elements 3 are arranged within the outer cladding 2, and surrounding the core region 4 wherein light may be made to propagate. In the example shown here, the fiber comprises six anti-resonant elements 3, in the form of circular capillaries. The anti-resonance elements 3 are shown here to form nodes, in that they touch each other where they are adjacent. These nodes support cladding modes residing in the glass, and when the core mode couples to these glass modes the loss increases. Therefore it has been shown that removing the circles from each other ("node-free" case) the leakage loss is reduced.

Figure 2 shows an embodiment of the HC-AR fiber 100 according to the present invention. The main components of the fiber are similar to those described above in connection with figure 1, in that the fiber comprises an outer cladding 102, a core region 104, and a number of anti-resonance elements 103. However, when compared to the fiber shown in figure 1, there are some important changes that have been employed in order to reduce leakage loss from the fiber 1, i.e. that the anti-resonance elements 103 are arranged in a node-free (i.e. non-touching) configuration, and that the elements 103 are non-circular, but rather have an elongated cross-sectional geometry with a major axis 105 and a minor axis 106. The anti-resonance elements 103 are arranged so that their major axes are oriented along radial directions of the fiber. The inventors have surprisingly found that the combination of allowing space between neighboring anti-resonance elements and forming them in a non-circular anisotropic shape significantly reduces the leakage loss and hence the total propagation loss through the fiber.

EXAMPLES

In the following, the fiber design will be studied through numerical simulations of example fibers, to gain a better understanding of the influence of the changes in fiber design.

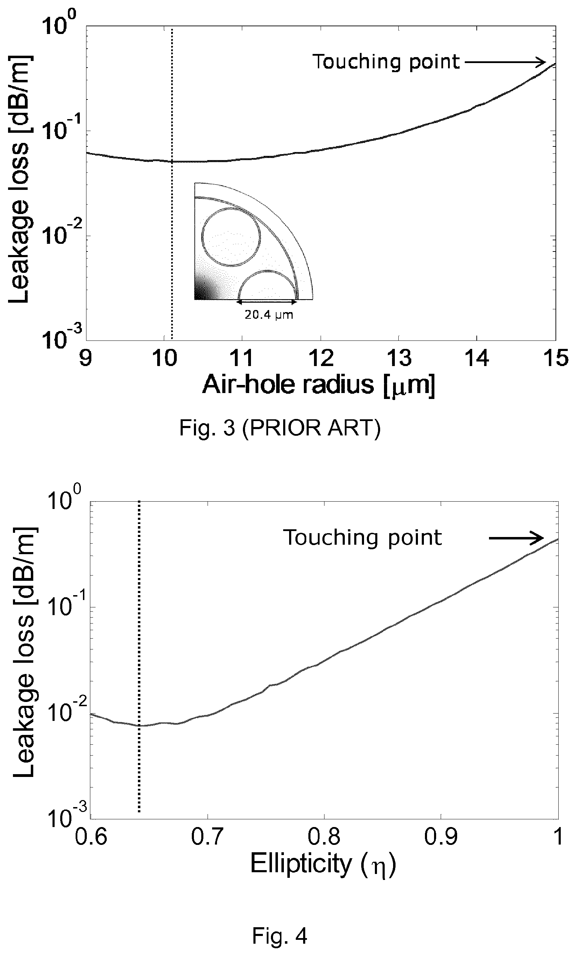

Figure 3 shows previously published calculations of leakage loss vs. air-hole radius for HC-AR fibers with circular anti-resonance elements. Firstly, the effect of the anti-resonance elements forming nodes or not are investigated. The structures under investigation in this work are: (i) HC-ARFs with six circular anti-resonant tubes (see Fig. 1) (ii) HC-ARFs with six elliptical anti-resonant tubes (see Fig. 2). We have chosen the same core radius R = 15 $\mu$m and strut thickness (i.e. a uniform wall thickness of the anti-resonance element) of $t$ = 0.42 $\mu$m for all of the studied designs so that first high loss resonant peak exhibits at around 0.85 $\mu$m. In these calculations, the optical material for forming the fiber is chosen to be silica, but the results could also be used for fibers of other materials. We used only a quarter of the geometry to perform the numerical calculations because of the symmetry of the modes, and have used the commercially available state-of-the-art *COMSOL* software. To illustrate the invention, we have chosen to optimize our proposed HC-AR fibers for an operating wavelength of around 1.06 $\mu$m. However, we note that the loss contributions considered here scale with wavelength, so that the fibers according to the invention may also be realized for other wavelengths by appropriate scaling of the structural dimension.

First we optimized our proposed HC-AR fibers at the design wavelength of 1.06 $\mu$m for six circular and elliptical anti-resonant tubes. Figure 3 shows the leakage loss as a function of air-hole radius for six circular tubes, for the given core radius of 15$\mu$m. It can be seen from Fig. 3 that the leakage loss decreases when air-hole radius decrease from 15 (i.e. elements touching) to 10.20 $\mu$m, and after that leakage loss again increases with the decrement of air-hole radius meaning that there is an optimum value of air-hole radius in which leakage loss is minimum. The lowest leakage loss was found ~0.05 dB/m for an air-hole radius (r) of 10.20 $\mu$m, which is around one order of magnitude lower in compared when the air-holes are touched with each other (see Fig. 3). The inset in Fig. 3 illustrates a mode profile for the fundamental mode at the design wavelength.

Figure 4 shows calculations of leakage loss vs. ellipticity for embodiments of HC-AR fibers according to the present invention. As for the simulation described above for fig. 3, the core radius is fixed at 15$\mu$m, and a "width" of the anti-resonance elements is varied. However, since these calculations were made for elliptical elements, the dimensions along the major axis are maintained (i.e 15$\mu$m), while the dimension along the minor axis is varied. Thus, we optimized the leakage loss for six elliptical anti-resonant tubes. For elliptical anti-resonant tubes, we define ellipticity as $\eta = r_y/r_x$, where $r_x$ and

$r_y$ are the radius of major and minor axis of the anti-resonant tubes respectively. In our simulations, we fix the air-hole radius of major axis to 15 $\mu$m, as mentioned, and change the air-hole radius of minor axis from 9 to 15 $\mu$m. Figure 4 shows that the lowest leakage loss of ~5 dB/km was obtained for an ellipticity of ~0.65, i.e., $r_x$ = 15 $\mu m$ and $r_y$ = 9.80 $\mu$m. It is seen from Fig. 4 that the leakage loss is reduced two orders of magnitude by suitably squeezing one of the axes of the anti-resonant tubes.

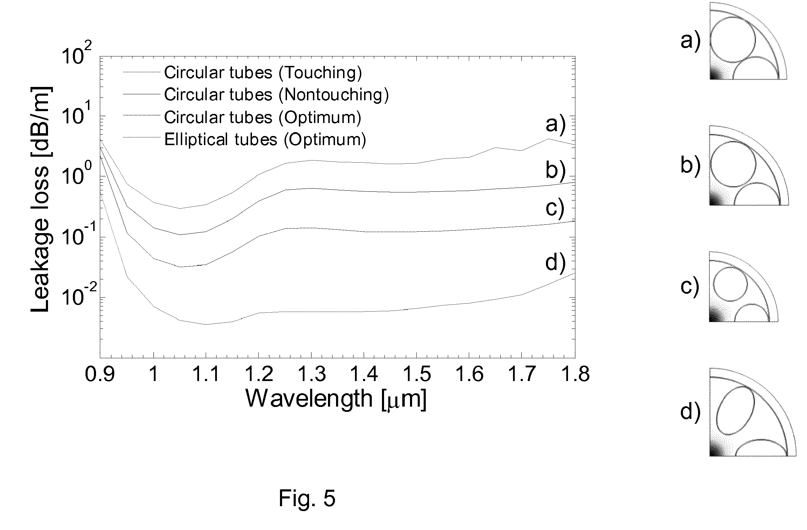

Figure 5 shows leakage loss comparison of HC-AR fibers according to the present invention to more conventional designs of HC-AR fibers. More specifically, the figure depicts the loss dependence on wavelength λ for different HC-AR fibers. Curve a) shows the loss curve of six circular anti-resonant tubes in which tube walls are touching each other, thus forming so-called nodes, as also seen in subfigure a). Curve b) shows the loss of HC-AR fiber having six circular anti-resonant tubes with the air-hole radius reduced to 14 $\mu$m as to ensure the walls of adjacent tubes no longer touch; the leakage loss is slightly higher than 0.1 dB/m at 1.06 $\mu$m. Interestingly, we therefore observe that by slightly separating the tubes there is a reduction of leakage loss. Therefore, we proceeded to optimize the air-hole radius as to minimize the loss. Curve c) shows the loss curve with the optimized circular air-hole radius; the leakage loss is lower in the entire wavelength regime ranging from 0.90 to 1.8 $\mu$m than that shown in curves a) and b). In contrast, going away from circular tubes or anti-resonance elements, curve d) shows the loss spectrum of six elliptical tubes with the optimized air-hole radius; the leakage loss is around two orders of magnitude and one order of magnitude lower than that shown in curves b) and c), respectively. Therefore, it is clear that squeezing one of the axes of the air-holes help to reduce leakage loss significantly.

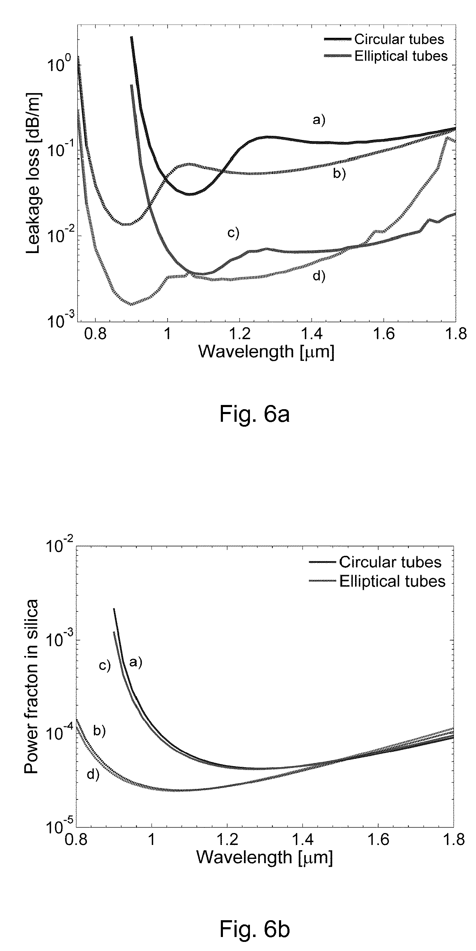

Figure 6 shows the wavelength dependence of the leakage loss (6a) and power fraction in silica (6b), respectively, for two different strut thicknesses, t = 0.42$\mu m$ and t = 0.35$\mu m$. The power fraction in silica (i.e. the optical power overlap with the silica cladding) and leakage loss as a function of wavelength are shown in the figures for both circular and elliptical tubes. One of the limiting factors in high power beam delivery is power fraction in silica, which should preferably be kept small. Figure 6b shows that power fraction in silica may be minimized by tuning the strut thickness of silica, resulting in a power fraction in silica of ~$1.7x10^{-5}$ at 1.06 $\mu$m, which are several orders of magnitude lower than reported values for PBG guiding HC-PCF. All these characteristics makes these HC-AR fibers an attractive medium for propagation of high power beam delivery. When comparing the power fraction in silica for circular and elliptical anti-resonant elements (fig. 6b) the change seems similar, but the advantage again comes in terms of leakage loss: the leakage loss (fig. 6a) for circular elements has a very significant minimum at a wavelength controlled by the strut thickness. As the strut thickness is reduced, this minimum shifts towards shorter wavelengths, but at the design wavelength, here 1.06 μm, the leakage loss actually increases as the strut thickness is reduced, due to the shape of the loss spectrum. The same overall characteristics are found for the elliptical case (fig. 6a), but here the wavelength variation is much more flat. This means that at 1.06 μm the leakage loss does not change that much when the strut thickness is reduced. In other words, the elliptical design allows for more degrees of freedom in the design as it is not necessary to have the strut thickness chosen to give a minimum at the design wavelength. One could, in principle, reduce the strut thickness even further, however, as the strut thickness decreases, practical handling of the fiber will become increasingly difficult, e.g. with respect to cleaving. This limit will be less severe if operating at longer IR wavelengths, as the cleaving minimal thickness is constant while longer wavelength inevitably will require AR elements with thicker struts.

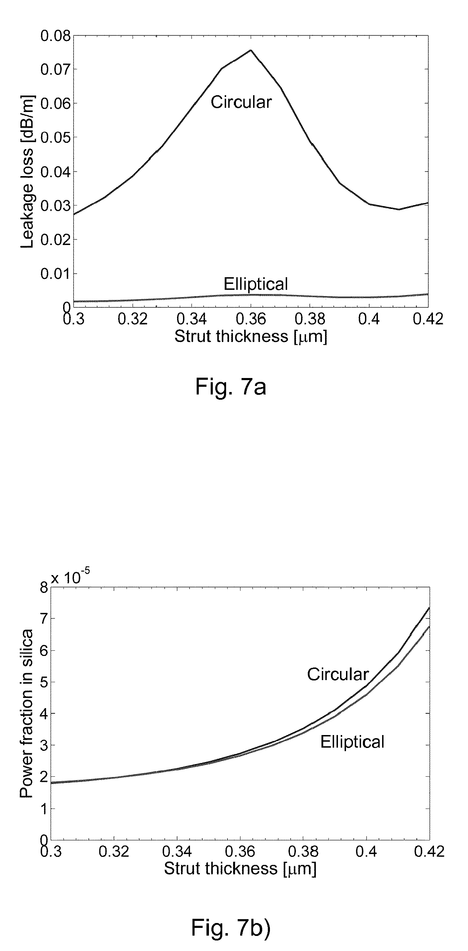

As for figure 6, figure 7 shows leakage loss and power fraction in silica for the same strut thickness. The figure summarizes these trends by showing the leakage loss and power fraction in silica as a function of strut thickness at the chosen design wavelength of 1.06 μm for both the circular and elliptical tube cases. It can be seen from Fig. 7a that elliptical tubes have one order of magnitude lower losses compared to circular when strut thickness varies from 0.35 to 0.42 μm; whereas power fraction in silica is almost same for both cases as shown in Fig. 7b. Importantly the loss is almost stable for elliptical tubes compared to circular tubes as a function of strut thickness whereas power fraction in silica reduces with the decrease of strut thickness for both cases.

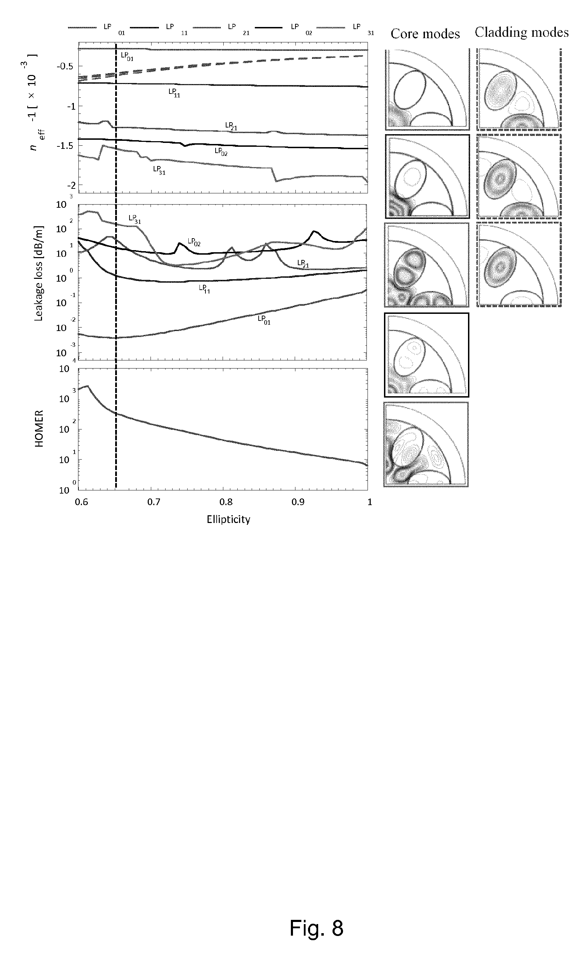

Figure 8 shows a study of core and cladding modes with respect to modal indices, leakage loss and higher-order mode extinction ratio (HOMER). Due to the large core of the HC-AR fibers, they are generally not truly single-moded. But they can be made effectively single-moded by suitably engineering the shape and size of the anti-resonant tubes. Figure 8 shows the relative effective indices ($\Delta n_{eff} = n_{eff} - 1$) of the first five core modes and first three cladding modes. We have denoted the first five core modes as LP01, LP11, LP21, LP02, and LP31 for the sake of simplicity. The fundamental core mode (LP01) has the highest relative effective index with Gaussian-like pattern in the core. The first three cladding modes have slightly larger $\Delta n_{eff}$ than the first higher order core mode (LP11). The slight difference of $\Delta n_{eff}$ between the cladding modes and first higher-order-core mode (HOM) are achieved because the core hole area is only 1.65 times larger than a single hole area in the cladding (A. Hartung, et al., "Low-loss single-mode guidance in large-core antiresonant hollow-core fibers", Opt. Letters 40(14), 3432-3435 (2015)). Therefore, the first HOM is located within the domain of the cladding modes, which increases the possibility of phase matching between the cladding modes and HOMs (Fig. 8). This effect is more evident for the strong elliptical anti-resonant tubes (η~0.60-0.70) in which coupling between the cladding modes and higher-order-core modes (HOMs) are more likely to occur than coupling to the fundamental core mode, which efficiently suppress the guidance of the HOMs leads to the higher HOMs loss. Figure 8 also shows the higher-order-mode extinction ratio (HOMER), which is defined as the ratio between the loss of the HOM having the lowest loss and the loss of the fundamental mode (FM). It can be seen from Fig. 8 that the leakage loss of the LP01 mode decreases with the decrement of ellipticity; whereas the minimum loss of the HOMs have higher losses compared to the LP01 mode in the whole ellipticity range. The effect of ellipticity on HOMs losses are more pronounced in the 0.60-0.70 ellipticity range while the loss of LP01 mode remains below 0.005 dB/m. Figure 8 shows that the loss of the HOMs can be made higher by suitably choosing the ellipticity of anti-resonant tubes which gives high HOMER. The maximal HOMER was found ~2500 at ellipticity ~0.61. It can also be seen from Fig. 8 that for circular anti-resonant tubes (ellipticity ~1) HOMER is below 10.

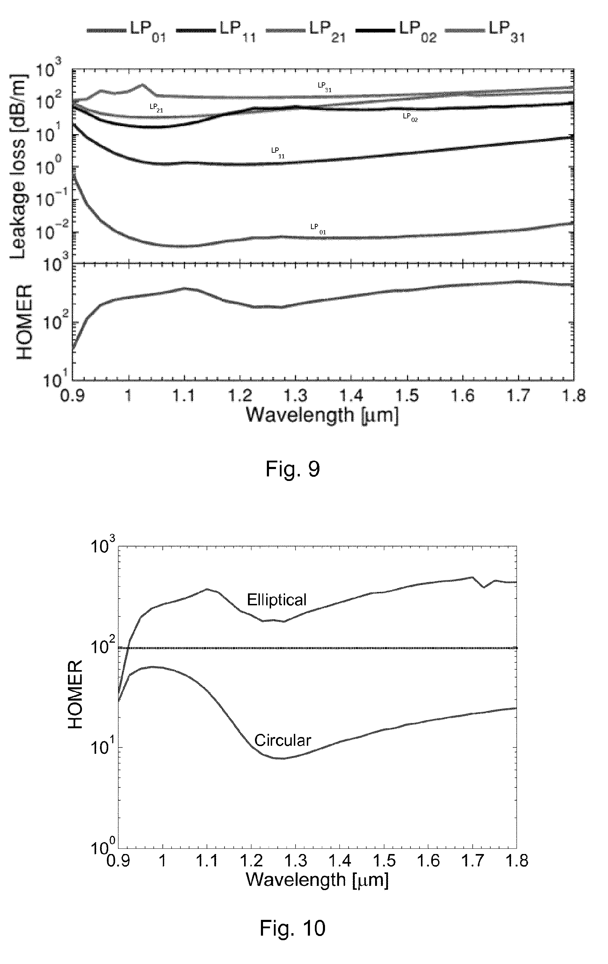

The wavelength dependence of leakage loss and HOMER is shown in Fig. 9. The HOMER can be made in excess of 150 in the spectral range 0.95-1.8μm, which indicates that the proposed HC-AR fiber can operate as effectively single-moded fiber. Figure 10 shows the HOMER as a function of wavelength for circular and elliptical anti-resonant tubes. It can be seen from Fig. 10 that elliptical tubes shows higher HOMER compared to the circular tubes in the entire spectral regime.

Although the present invention has been described in connection with the specified embodiments, it should not be construed as being in any way limited to the presented examples. The scope of the present invention is set out by the accompanying claim set. For instance, while the calculations shown have been for elliptical anti-resonance elements and fibers made from silica, the invention is not limited to this specific geometry or this material. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

1. An anti-resonant hollow-core optical fiber with a waveguide structure having a longitudinal direction, the optical fiber comprising:

     - an outer cladding region extending in the longitudinal direction, the outer cladding region having a substantially tubular inner wall and forming an internal volume,

- a core region comprising a central void, and

- an inner cladding region comprising an optical material, the inner cladding region being arranged around the core region within the internal volume and extending in the longitudinal direction, the inner cladding region comprising a plurality of anti-resonance elements being arranged adjacent to the inner wall, each having an elongated cross-sectional geometry with a minor axis and a major axis, wherein the major axis is arranged along a radial direction of the fiber and the minor axis is arranged along a tangential direction of the fiber, and wherein the anti-resonance elements are further arranged in a distance from their neighboring elements, and wherein the anti-resonance elements have a negative curvature where they are proximal to the core region.

2. The anti-resonant hollow-core optical fiber according to any one of the previous claims, wherein the elongated cross-sectional geometry of the anti-resonance element is an oval geometry.

3. The anti-resonant hollow-core optical fiber according to any one of the previous claims, wherein the elongated cross-sectional geometry of the anti-resonance element is an elliptical geometry.

4. The anti-resonant hollow-core optical fiber according to any one of the previous claims, wherein a ratio between the outer dimensions of the anti-resonance elements along the minor and major axis, respectively, is in the range 0.4-0.8, such as in the range 0.5-0.75, or even such as in the range 0.6-0.7.

5. The anti-resonant hollow-core optical fiber according to any one of the previous claims, wherein one or more of the anti-resonance elements comprise an inner void.

6. The anti-resonant hollow-core optical fiber according to claim 5, wherein one or more of the anti-resonance elements comprises multiple inner voids.

7. The anti-resonant hollow-core optical fiber according to any one of claims 5-6, wherein one or more of the anti-resonance elements comprises a strut separating the inner void from element surroundings, and wherein the strut has a strut thickness, as measured in the cross-sectional plane, in the range 0.2$\mu$m-0.45$\mu$m, such as in the range 0.2$\mu$m-0.3$\mu$m, or even such as in the range 0.3$\mu$m-0.45$\mu$m.

8. The anti-resonant hollow-core optical fiber according to any one of the previous claims, wherein a radius of curvature of the anti-resonance elements in a region adjacent to the core region is in the range of 2 $\mu$m-15 $\mu$m, such as in the range 5 $\mu$m-14 $\mu$m, or even such as in the range 4 $\mu$m-10 $\mu$m.

9. The anti-resonant hollow-core optical fiber according to any one of the previous claims, wherein the fiber is configured for transmitting light having a wavelength in the range 0.45 $\mu$m-2.0 $\mu$m, such as in the range 0.45 $\mu$m-0.8 $\mu$m or in the range 0.9 $\mu$m-2.0 $\mu$m, or in the range 0.5 $\mu$m-1.6$\mu$m, or even in the range 0.8 $\mu$m-1.2 $\mu$m.

10. The anti-resonant hollow-core optical fiber according to any one of the previous claims, wherein the optical material is chosen from glasses in the group of silica, ZBLAN, fluorides, tellurite, phosphate, chalcogenide, or a polymer such as PMMA, or topas.

11. Use of the anti-resonant hollow-core optical fiber according to any one of the previous claims, for delivery of optical pulses.

12. Use of the anti-resonant hollow-core optical fiber according to claim 11, wherein the optical pulses are femtosecond pulses.

13. A system comprising the anti-resonant hollow-core optical fiber according to any one of the claims 1-10, and a Yb-femtosecond laser.

Fig. 1 (PRIOR ART)

Fig. 2

Fig. 3 (PRIOR ART)

Fig. 4

Fig. 5

Fig. 6a

Fig. 6b

Fig. 7a

Fig. 7b)

Fig. 8

Fig. 9

Fig. 10

Europäisches
Patentamt

European
Patent Office

Office européen
des brevets

## EUROPEAN SEARCH REPORT

Application Number

EP 16 15 3043

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 526 879 A (UNIV SOUTHAMPTON [GB]) 9 December 2015 (2015-12-09) * pages 15-23 * * figures 2,18 * ----- | 1-13 | INV. G02B6/02 |

TECHNICAL FIELDS
SEARCHED        (IPC)

G02B

The present search report has been drawn up for all claims

| Place of search | Date of completion of the search | Examiner |
|---|---|---|
| The Hague | 16 March 2016 | Hohmann, Leander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 15 3043

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2016

| Patent document cited in search report | | Publication date | Patent family member(s) | | Publication date |
|---|---|---|---|---|---|
| GB 2526879 | A | 09-12-2015 | GB | 2526879 A | 09-12-2015 |
| | | | WO | 2015185761 A1 | 10-12-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PRYAMIKOV et al.** Demonstration of a waveguide regime for a silica hollow-core microstructured optical fiber with a negative curvature of the core boundary in the spectral region > 3.5 $\mu$m. *Opt. Express,* 2011, vol. 19 (2), 1441-1448
- **KOSOLAPOV et al.** Demonstration of CO2-laser power delivery through chalcogenide-glass fiber with negative-curvature hollow core. *Opt. Express,* 2011, vol. 19 (25), 25723-25728
- **W. BELARDI ; J. C. KNIGHT.** Hollow antiresonant fibers with low bending loss. *Opt. Express,* 2014, vol. 22 (8), 10091-10096

- **YU et al.** Low loss silica hollow core fibers for 3-4 $\mu$m spectral region. *Opt. Express,* 2012, vol. 20 (10), 11153-11158
- **F. POLETTI.** Nested antiresonant nodeless hollow core fiber. *Opt. Express,* 2014, vol. 22 (20), 23807-23828
- **M. S. HABIB et al.** Low-loss hollow-core silica fibers with adjacent nested anti-resonant tubes. *Opt. Express,* 2015, vol. 23, 17394-17406
- **A. HARTUNG et al.** Low-loss single-mode guidance in large-core antiresonant hollow-core fibers. *Opt. Letters,* 2015, vol. 40 (14), 3432-3435